# EUROPÄISCHE PATENTSCHRIFT

(11) **EP 2 887 040 B1**
(45) Veröffentlichungstag und Bekanntmachung des Hinweises auf die Patenterteilung: **13.12.2017**
(21) Anmeldenummer: 14198609.1
(22) Anmeldetag: 17.12.2014
(51) Int. Cl.: G01L 1/26, G01L 1/22, B60L 5/18, G01L 1/24

(54) **Vorrichtung und Verfahren zum Ermitteln der Kontaktkraft zwischen zwei Bauteilen**
Device and method for determining the contact force between two components
Dispositif et procédé de détermination de la force de contact entre deux composants

(30) Priorität: 18.12.2013 DE 102013114418
(43) Veröffentlichungstag der Anmeldung: 24.06.2015
(73) Patentinhaber: Eurailscout Inspection & Analysis b.v., 10243 Berlin (DE)
(72) Erfinder: Ecke, Wolfgang, 07747 Jena (DE); Schröder, Kerstin, 07745 Jena (DE); Sonntag, André, 10243 Berlin (DE); Richter, Uwe, 10243 Berlin (DE)
(74) Vertreter: Manitz Finsterwald Patentanwälte PartmbB

(56) Entgegenhaltungen:
- EP-A1- 0 635 703
- EP-A1- 1 707 427
- DE-A1- 10 249 896
- DE-A1- 19 906 162
- US-A1- 2004 237 648

## Beschreibung

Die vorliegende Erfindung betrifft eine Vorrichtung zum Ermitteln der Kontaktkraft zwischen zwei Bauteilen, von denen wenigstens eines beweglich ist, insbesondere zwischen einem Fahrdraht und einem Stromabnehmer eines Fahrzeugs, wobei die Vorrichtung einen Verformungskörper, der derart an einem der Bauteile anbringbar ist, dass er unter dem Einfluss der Kontaktkraft zumindest bereichsweise gedehnt wird, einen an dem Verformungskörper angebrachten ersten Dehnungssensor zum Erfassen der Dehnung, und eine Auswerteeinrichtung umfasst, die dazu ausgebildet ist, anhand der erfassten Dehnung eine statische Kontaktkraft zu ermitteln.

Derartige Vorrichtungen können beispielsweise an elektrisch betriebenen Schienenfahrzeugen dazu verwendet werden, die Kontaktkraft zwischen dem Fahrdraht und einem Stromabnehmer des Schienenfahrzeugs zu überwachen. Beim Einsatz von Stromabnehmern ist es nämlich wichtig, einerseits eine zu hohe Kontaktkraft und damit einen übermäßigen Verschleiß und andererseits eine zu geringe Kontaktkraft und damit einen unzureichenden elektrischen Kontakt zu vermeiden. Ein besonders wichtiges Einsatzgebiet von Vorrichtungen der eingangs genannten Art ist das Überprüfen von Oberleitungen auf Schäden mittels Kontaktkraftmessung.

Allgemein besteht eine Schwierigkeit bei Kontaktkraftmessungen darin, dass bei einer beschleunigten Bewegung der Bauteile relativ zueinander Trägheitskräfte auftreten, welche von dem Dehnungssensor ebenfalls erfasst werden und das Messergebnis verfälschen. Um dies zu vermeiden, kann anstelle einer statischen Kontaktkraftmessung eine dynamische Kontaktkraftmessung durchgeführt werden, bei welcher die Beschleunigung des beweglichen Bauteils erfasst und zur Kompensation der Trägheitseffekte bei der Kontaktkraftermittlung verwendet wird. Die Erfassung der Beschleunigung kann beispielsweise mittels eines separaten Beschleunigungssensors erfolgen, welcher an die Auswerteeinrichtung angeschlossen wird. Dies ist jedoch mit einem beträchtlichen Herstellungsaufwand und darüber hinaus mit einem erhöhten Platzbedarf verbunden.

Die EP 1 707 427 A1 offenbart einen Stromabnehmer für ein Schienenfahrzeug, in dessen Schleifleistenhalterung ein Kraftsensor zum Ermitteln der Kontaktkraft integriert ist.

In der JPS 57-153224 A ist eine elektronische Waage offenbart, deren Kraftmesszelle auf einem Verformungskörper mit daran angebrachten Dehnungssensoren beruht. Um Trägheitseffekte zu kompensieren, ist ein schwingungsfähiges Gewicht an einem Balken vorgesehen.

Die EP 0 635 703 A1 offenbart eine elektronische Waage mit einem Doppelbiegebalken, an dem elektrische Dehnungsmessstreifen angeordnet sind.

Es ist eine Aufgabe der Erfindung, eine Vorrichtung der eingangs genannten Art mit einfachen Mitteln derart zu erweitern, dass eine Kompensation der Trägheitskräfte ermöglicht ist.

Die Lösung der Aufgabe erfolgt durch eine Vorrichtung mit den Merkmalen des Anspruchs 1.

Erfindungsgemäß ist eine Prüfmasse derart an einem biegsamen Abschnitt des Verformungskörpers vorgesehen, dass sie schwingende Bewegungen in und entgegen der Richtung der Kontaktkraft ausführen kann, wobei an dem biegsamen Abschnitt ein zweiter Dehnungssensor zum Erfassen der Biegung angebracht ist, und wobei die Auswerteeinrichtung dazu ausgebildet ist, anhand der erfassten Biegung eine Beschleunigung der Prüfmasse zu ermitteln und beruhend auf der ermittelten statischen Kontaktkraft und der ermittelten Beschleunigung der Prüfmasse eine trägheitskompensierte Kontaktkraft zu ermitteln.

Mittels der schwingenden Prüfmasse kann die Beschleunigung des Verformungskörpers und somit des beweglichen Bauteils zuverlässig ermittelt werden. Dadurch dass sowohl die statische Kontaktkraft als auch die Beschleunigung mittels Dehnungssensoren ermittelt werden, die an ein und demselben Verformungskörper angebracht sind, entfällt das kostspielige Bereitstellen eines separaten Beschleunigungssensors. Zudem beansprucht die Vorrichtung aufgrund der Integration der statischen Kontaktkraftmessung und der Beschleunigungsmessung in einen einzelnen Verformungskörper nur wenig Bauraum. Zudem ist die Auswertung dadurch vereinfacht, dass die statische Kontaktkraftmessung und die Beschleunigungsmessung auf dem gleichen sensorischen Prinzip "Dehnungsmessung" beruhen.

Erfindungsgemäß ist/sind der erste Dehnungssensor und/oder der zweite Dehnungssensor als faseroptische Sensor(en), besonders bevorzugt als Faser-Bragg-Gitter-Sensor(en), ausgebildet. Hierdurch kann die elektromagnetische Störanfälligkeit der Vorrichtung auf ein Minimum reduziert werden. Das elektromagnetische Feld in der Umgebung von Oberleitungen ist nämlich häufig relativ starken Schwankungen unterworfen, welche elektrische Sensoren dementsprechend beeinflussen. Zudem liegt der Fahrdraht eines Oberleitungssystems üblicherweise auf Hochspannungsniveau, während sich die elektronischen Komponenten der Auswerteeinrichtung auf Erdpotential befinden, sodass bei Verwendung elektrischer Dehnungssensoren Vorkehrungen zur Potentialtrennung getroffen werden müssen. Dieser Aufwand kann durch den Einsatz faseroptischer Sensoren vermieden werden. Faser-Bragg-Gitter-Sensoren können auf besonders einfache Weise zur Dehnungsmessung verwendet werden, indem der das Bragg-Gitter enthaltende Abschnitt einfach auf den gewünschten Abschnitt des Verformungskörpers aufgebracht, z.B. aufgeklebt, wird. Faser-Bragg-Gitter-Sensoren zeichnen sich auch dadurch aus, dass sie vergleichsweise langlebig und korrosionsbeständig sind.

Weiterbildungen der Erfindung sind in den abhängigen Ansprüchen, der Beschreibung sowie der beigefügten Zeichnung angegeben.

Gemäß einer Ausführungsform der Erfindung weist der Verformungskörper eine, insbesondere hohlraumartige, Aussparung auf, in welche der biegsame Abschnitt hineinragt. Hierdurch lässt sich ein besonders kompakter Aufbau des Verformungskörpers erzielen. Insbesondere werden ausladende Teile an der Außenfläche des Verformungskörpers vermieden. Zudem kann die schwingende Prüfmasse durch Anordnung in einer Aussparung vor äußeren Einflüssen geschützt werden.

Eine weitere Ausführungsform der Erfindung sieht vor, dass der erste Dehnungssensor auf einen Bereich des Verformungskörpers aufgebracht ist, welcher unter dem Einfluss der Kontaktkraft eine negative Dehnung oder Stauchung erfährt, wobei ein weiterer Dehnungssensor auf einen Bereich des Verformungskörpers aufgebracht ist, welcher unter dem Einfluss der Kontaktkraft eine positive Dehnung oder Streckung erfährt. Bevorzugt sind die beiden Dehnungssensoren derart angeordnet, dass Stauchung und Streckung vom Betrag her gleich sind.

Die Auswerteeinrichtung ist hierbei vorzugsweise dazu ausgebildet, beim Ermitteln der statischen Kontaktkraft sowohl die von dem ersten Dehnungssensor erfasste Stauchung als auch die von dem weiteren Dehnungssensor erfasste Streckung zu berücksichtigen, insbesondere ein von dem ersten Dehnungssensor ausgegebenes Stauchungssignal von einem von dem weiteren Dehnungssensor ausgegebenen Streckungssignal zu subtrahieren. Hierdurch kann die bei Dehnungssensoren üblicherweise vorhandene ausgeprägte Temperaturabhängigkeit kompensiert und so die Zuverlässigkeit der Kontaktkraftmessung beträchtlich erhöht werden.

Es können auch wenigstens zwei Paare von Dehnungssensoren vorgesehen sein die jeweils einen unter Einfluss der Kontaktkraft zu stauchenden Dehnungssensor und einen unter dem Einfluss der Kontaktkraft zu streckenden Dehnungssensor umfassen, wobei die Auswerteeinrichtung dazu ausgebildet ist, beim Ermitteln der statischen Kontaktkraft für jedes Paar ein Differenzsignal zu berücksichtigen, das auf einer Differenz zwischen einem von dem jeweiligen zu stauchenden Dehnungssensor ausgegebenen Stauchungssignal und einem von dem jeweiligen zu streckenden Dehnungssensor ausgegebenen Streckungssignal beruht.

Die Auswerteeinrichtung kann ferner dazu ausgebildet sein, beim Ermitteln der statischen Kontaktkraft die Differenzsignale der Paare von Dehnungssensoren gemäß jeweiliger Gewichtungsfaktoren zu berücksichtigen, wobei, bevorzugt, die Gewichtungsfaktoren auf einer Kalibrierung der Vorrichtung bei konstanter Temperatur beruhen.

Dies trägt dem Umstand Rechnung, dass mit zunehmender Anzahl von ausgewerteten Sensorsignalen der Einfluss zufälliger fehlerhafter Abweichungen der Einzelsensoren abnimmt. Aufgrund von unvermeidlichen Fertigungstoleranzen können nämlich die Dehnungen und Stauchungen der Einzelsensoren trotz gleicher Belastung unterschiedliche Beträge aufweisen. Dementsprechend ist es vorteilhaft, bei der Differenzbildung der Dehnungssignale - im Falle von Faser-Bragg-Gitter-Sensoren der Bragg-Wellenlängen-Verschiebungen - eine Gewichtung vorzunehmen. Eine einmalige Kalibrierung bei konstanter Temperatur erlaubt die Bestimmung der notwendigen Gewichtungsfaktoren. Sie sind reziprok zur Dehnungsempfindlichkeit. Bei der experimentellen Bestimmung der Gewichtungsfaktoren wird gewissermaßen automatisch mitberücksichtigt, dass nicht die absoluten, sondern die relativen Bragg-Wellenlängen-Verschiebungen proportional zur Dehnung sind, das heißt dass die reziproken Bragg-Wellenlängen Bestandteil solcher Gewichtungsfaktoren sind.

Der Verformungskörper kann weiterhin ein Viergelenk bilden, wobei an wenigstens zwei Gelenkstellen des Viergelenks Dehnungssensoren angebracht sind. An den Gelenkstellen eines als Viergelenk ausgebildeten Verformungskörpers treten naturgemäß miteinander gekoppelte Streckungen und Stauchungen auf, welche in vorteilhafter Weise zur temperaturkompensierten Dehnungsmessung verwendet werden können. Bei entsprechender symmetrischer Ausgestaltung des Viergelenks können die Einflüsse von Biegemomenten vermieden werden.

Insbesondere kann der Verformungskörper als Doppelbiegebalken ausgebildet sein. Dies ermöglicht eine besonders einfache Konstruktion. Alternativ könnte der Verformungskörper auch als S-förmiger Körper oder als einfacher Biegebalken ausgebildet sein.

Der Doppelbiegebalken kann zumindest im Bereich der Dehnungssensoren eine uneinheitliche Querschnittsform und/oder eine uneinheitliche Querschnittsgröße aufweisen. Dies ermöglicht eine besonders genaue Auswertung. Prinzipiell ist es jedoch auch möglich, einen Doppelbiegebalken mit konstantem Querschnitt zu verwenden und einen zusätzlichen Gitterparameter auszuwerten.

Eine weitere Ausführungsform der Erfindung sieht vor, dass der zweite Dehnungssensor auf einen Bereich des biegsamen Abschnitts aufgebracht ist, welcher bei einer Bewegung der Prüfmasse in Richtung der Kontaktkraft eine negative Dehnung oder Stauchung erfährt, und wobei ein weiterer Dehnungssensor auf einen Bereich des biegsamen Abschnitts aufgebracht ist, welcher bei einer Bewegung der Prüfmasse in Richtung der Kontaktkraft eine positive Dehnung oder Streckung erfährt. Bevorzugt sind die beiden Dehnungssensoren derart angeordnet, dass Stauchung und Streckung vom Betrag her gleich sind.

Vorzugsweise ist die Auswerteeinrichtung hierbei dazu ausgebildet, beim Ermitteln der Beschleunigung der Prüfmasse sowohl die von dem zweiten Dehnungssensor erfasste Stauchung als auch die von dem weiteren Dehnungssensor erfasste Streckung zu berücksichtigen, insbesondere ein von dem zweiten Dehnungssensor ausgegebenes Stauchungssignal von einem von dem weiteren Dehnungssensor ausgegebenen Streckungssignal zu subtrahieren. Hierdurch kann die bei Dehnungssensoren üblicherweise vorhandene ausgeprägte Temperaturabhängigkeit kompensiert und so die Zuverlässigkeit der Kontaktkraftmessung beträchtlich erhöht werden. Besonders bevorzugt ist es, sowohl das Ermitteln der statischen Kontaktkraft als auch das Ermitteln der Beschleunigung wie vorstehend beschrieben durch Berücksichtigen einer gekoppelten betragsmäßig gleichen Stauchung und Streckung temperaturkompensiert durchzuführen.

Gemäß einer Ausgestaltung der Erfindung ist der biegsame Abschnitt als Biegebalken, insbesondere als einfacher Biegebalken, ausgebildet, wobei sowohl auf die Oberseite als auch auf die Unterseite des Biegebalkens jeweils ein Dehnungssensor aufgebracht ist. Hierdurch ist eine besonders einfache Konstruktion gegeben. Bei einer Bewegung des freien Endes eines Biegebalkens nach unten erfährt dessen Oberseite eine Streckung und dessen Unterseite eine gleichzeitige Stauchung. Dieser Umstand kann in vorteilhafter Weise zur Temperaturkompensation genutzt werden.

Der Biegebalken kann zumindest im Bereich der Dehnungssensoren eine uneinheitliche Querschnittsform und/oder eine uneinheitliche Querschnittsgröße aufweisen. Dies ermöglicht eine besonders genaue Auswertung. Prinzipiell ist es jedoch auch möglich, einen Biegebalken mit konstantem Querschnitt zu verwenden und einen zusätzlichen Gitterparameter auszuwerten.

Ein weiterer Dehnungssensor, insbesondere ein Faser-Bragg-Gitter-Sensor, kann an einem Bereich des Verformungskörpers angebracht sein, welcher unter dem Einfluss der Kontaktkraft nicht zu einer Dehnung gelangt. Ein solcher Dehnungssensor kann zur Erfassung der aktuellen Temperatur herangezogen werden. Die erfasste Temperatur kann von der Auswerteeinrichtung dahingehend berücksichtigt werden, dass die Temperaturabhängigkeit des ersten und/oder des zweiten Dehnungssensors, vorzugsweise aller übrigen Dehnungssensoren, kompensiert wird. Eine solche Ausgestaltung ermöglicht eine besonders einfache Form einer temperaturkompensierten Kontaktkraftmessung mittels Dehnungssensoren.

Eine spezielle Ausgestaltung der Erfindung sieht vor, dass der Verformungskörper an einem Ende fest mit einem Trägerbauteil eines Stromabnehmers gekoppelt ist und eine Schleifleiste des Stromabnehmers unter dem Einfluss der Kontaktkraft auf das andere Ende des Verformungskörpers drückt. Der Verformungskörper kann insbesondere in das Trägerbauteil, z.B. in eine Wippe des Stromabnehmers, integriert sein.

Die Erfindung betrifft auch einen Stromabnehmer für ein Fahrzeug, der mit einer Vorrichtung wie vorstehend beschrieben ausgestattet ist. Bei dem Fahrzeug kann es sich um ein elektrisch angetriebenes Schienen-oder Straßenfahrzeug wie einen Omnibus, eine Lokomotive oder einen Triebwagen handeln, aber auch um ein Fahrzeug ohne elektrischen Antrieb, welches dem Fahrdraht über einen Stromabnehmer elektrischen Strom für anderweitige Zwecke entnimmt. Gemäß einer speziellen Ausgestaltung der Erfindung handelt es sich bei dem Fahrzeug um ein nicht elektrisch betriebenes Schienenfahrzeug, bei welchem der Stromabnehmer zum Prüfen oder Überwachen des Fahrdrahts vorgesehen ist.

Weiterhin betrifft die Erfindung ein Fahrzeug, insbesondere Schienenfahrzeug, das einen mit einem Fahrdraht in Kontakt zu bringenden Stromabnehmer wie vorstehend beschrieben aufweist.

Die Erfindung betrifft ferner ein Verfahren zum Ermitteln der Kontaktkraft zwischen zwei Bauteilen, von denen wenigstens eines beweglich ist, insbesondere zwischen einem Fahrdraht und einem Stromabnehmer eines Fahrzeugs, nach dem in Anspruch 12 offenbarten Verfahren. Das erfindungsgemäße Vorgehen ermöglicht auf einfache Weise ein trägheitskompensiertes Ermitteln der Kontaktkraft zwischen zwei Bauteilen. Gemäß einer Ausführungsform der Erfindung wird der Verformungskörper an einem Stromabnehmer eines Fahrzeugs angebracht, wobei die trägheitskompensierte Kontaktkraft während des Betriebs des Fahrzeugs wiederholt oder kontinuierlich ermittelt wird. Auf diese Weise ist beispielsweise ein so genanntes "Oberleitungsmonitoring" möglich, welches insbesondere in heterogenen Eisenbahnnetzen bedeutsam ist. Auf die beschriebene Weise ist nicht nur eine vorbeugende Kontrolle des Fahrdrahts möglich, sondern auch eine rechtzeitige Erkennung vorhandener Schäden sowie eine Dokumentation des Ist-Zustands bei Schadensereignissen.

Gemäß einer Ausführungsform der Erfindung wird beim Ermitteln der statischen Kontaktkraft sowohl eine von dem ersten Dehnungssensor erfasste Stauchung eines Bereichs des Verformungskörpers als auch eine von einem weiteren Dehnungssensor erfasste Streckung eines Bereichs des Verformungskörpers berücksichtigt, wobei insbesondere ein von dem ersten Dehnungssensor ausgegebenes Stauchungssignal von einem von dem weiteren Dehnungssensor ausgegebenen Streckungssignal subtrahiert wird.

Gemäß einer weiteren Ausführungsform der Erfindung werden beim Ermitteln der Beschleunigung der Prüfmasse sowohl eine von dem zweiten Dehnungssensor erfasste Stauchung eines Bereichs des Verformungskörpers als auch eine von dem weiteren Dehnungssensor erfasste Streckung eines Bereichs des Verformungskörpers berücksichtigt, wobei insbesondere ein von dem zweiten Dehnungssensor ausgegebenes Stauchungssignal von einem von dem weiteren Dehnungssensor ausgegebenen Streckungssignal subtrahiert wird.

Die Erfindung wird nachfolgend beispielhaft anhand der Zeichnung beschrieben.
- Fig. 1: ist eine Seitenansicht eines Stromabnehmers für ein Fahrzeug, der mit einer erfindungsgemäßen Vorrichtung zum Ermitteln der Kontaktkraft zwischen einem Fahrdraht und dem Stromabnehmer ausgestattet ist.
- Fig. 2: zeigt einen Verformungskörper einer Vorrichtung gemäß einer ersten Ausführungsform der Erfindung in einer seitlichen Schnittansicht.
- Fig. 3: zeigt einen Verformungskörper einer Vorrichtung gemäß einer zweiten Ausführungsform der Erfindung in einer seitlichen Schnittansicht.
- Fig. 4: zeigt einen Verformungskörper einer Vorrichtung gemäß einer dritten Ausführungsform der Erfindung in einer seitlichen Schnittansicht.

Der Stromabnehmer 13 eines elektrisch angetriebenen Fahrzeugs 11 umfasst in an sich bekannter Weise ein am Fahrzeug 11 beweglich angebrachtes Gestänge 23, an dessen oberem Ende eine Wippe 15 gelagert ist. Die Wippe 15 trägt zwei parallele Schleifleistenhalter 19 mit entsprechenden Schleifleisten 17, über welche der elektrische Kontakt zu einem Fahrdraht 14 erfolgt. Das Gestänge 23 ist mittels eines lediglich schematisch dargestellten Isolators 25 gegenüber dem Fahrzeug 11 elektrisch isoliert. Bei dem Fahrzeug 11 kann es sich insbesondere um ein Schienenfahrzeug wie eine elektrische Lokomotive oder einen Triebwagen handeln.

Die Kontaktkraft zwischen den Schleifleisten 17 und dem Fahrdraht 14 bestimmt letztlich die Effizienz der Stromentnahme aus dem Fahrdraht 14. Um einerseits häufige Kontaktabrisse und andererseits eine unerwünscht hohe Materialabnutzung zu vermeiden, ist es allgemein wünschenswert, die Kontaktkraft während des Betriebs des Fahrzeugs 11 zu überwachen, vorzugsweise fortlaufend. Zu diesem Zweck ist eine Vorrichtung 27 zum Ermitteln der Kontaktkraft zwischen dem Fahrdraht 14 und dem Stromabnehmer 13 vorgesehen, welche mehrere in die Wippe 15 integrierte Sensorköpfe 29 sowie eine direkt am oder im Fahrzeug 11 untergebrachte elektronische Auswerteeinrichtung 28 umfasst. Die Sensorköpfe 29 beruhen auf faseroptischen Dehnungssensoren, welche über Lichtwellenleiter (LWL) 30 an die Auswerteeinrichtung 28 angeschlossen sind und daher naturgemäß keine Maßnahmen zur Potentialtrennung erfordern. Ferner ist eine Verfälschung der Kontaktkraftermittlung aufgrund von elektromagnetischen Störfeldern, welche von dem Fahrdraht 14 ausgehen, weitgehend ausgeschlossen.

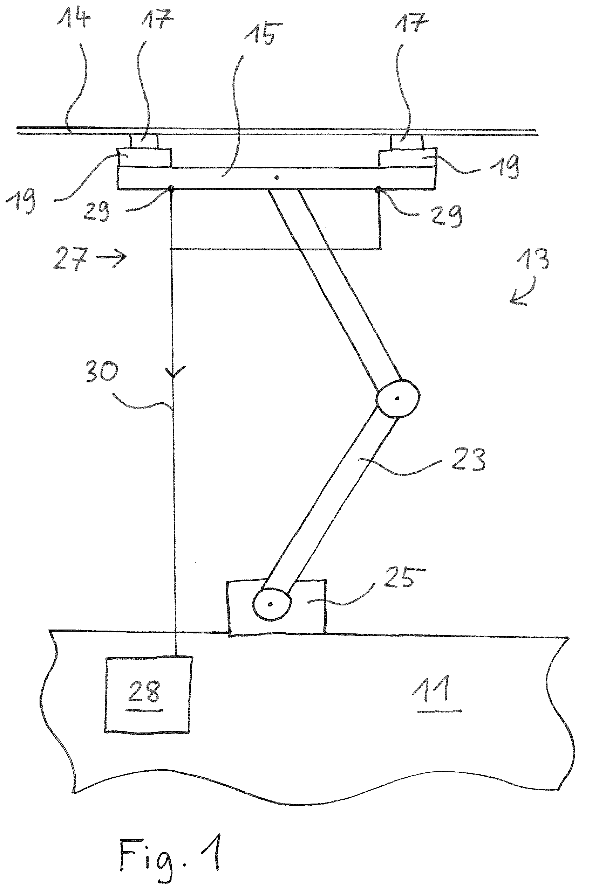

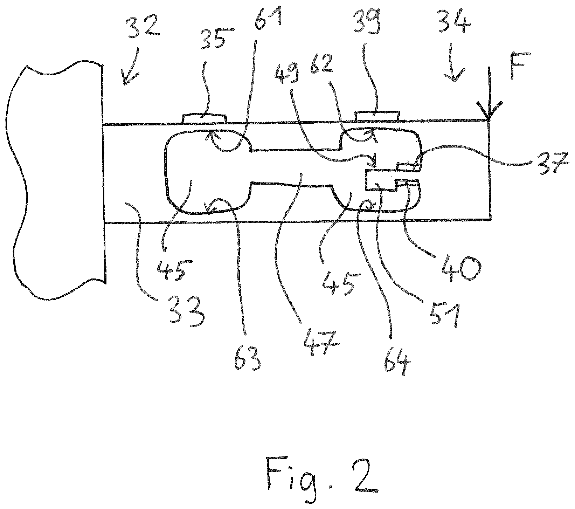

Den in Fig. 1 lediglich schematisch dargestellten Sensorköpfen 29 liegen als Messprinzip Dehnungsmessungen an einem Verformungskörper zugrunde, wie nachfolgend unter zusätzlicher Bezugnahme auf Fig. 2 näher ausgeführt wird.

Der in Fig. 2 in Schnittansicht dargestellte Verformungskörper 33 ist als länglicher Doppelbiegebalken ausgebildet, wobei das im Bild linke Balkenende 32 z.B. am Schleifleistenhalter 19 befestigt ist, während die Schleifleiste 17 unter dem Einfluss der Kontaktkraft F auf das rechte Balkenende 34 drückt.

Der Verformungskörper 33 weist zwei voneinander beabstandete Hohlräume 45 auf, die durch eine Passage 47 miteinander verbunden sind. Dadurch dass die Passage 47 schmäler ist als die Hohlräume 45, bildet der Verformungskörper 33 ein Viergelenk, bei welchem die Bereiche mit geringer Wanddicke wie Scharniere wirken und entsprechende Gelenkstellen 61-64 bilden. An den beiden oberen Gelenkstellen 61, 62 sind zwei Dehnungssensoren 35, 39 in Form von Faser-Bragg-Gitter-Sensoren (FBG-Sensoren) auf die Oberfläche des Verformungskörpers 33 aufgebracht. Wenn das rechte Balkenende 34 unter dem Einfluss der Kontaktkraft F nach unten gedrückt wird, erfährt der an der oberen linken Gelenkstelle 61 befindliche Dehnungssensor 35 eine positive Dehnung oder Streckung, während der an der oberen rechten Gelenkstelle 62 befindliche Dehnungssensor 39 eine negative Dehnung oder Stauchung von gleichem Betrag erfährt.

Wie aus Fig. 2 hervorgeht, ragt ein ausladender Abschnitt des Verformungskörpers 33 in Form eines Biegebalkens 49 in den im Bild rechten Hohlraum 45 hinein. Am freien Ende des Biegebalkens 49 ist eine Prüfmasse 51 vorgesehen, welche schwingende Bewegungen in und entgegen der Richtung der Kontaktkraft F ausführen kann. Ein Dehnungssensor 37 ist auf die Oberseite des Biegebalkens 49 aufgebracht. Ebenso ist ein weiterer Dehnungssensor 40 auf die Unterseite des Biegebalkens 49 aufgebracht. Wenn infolge einer beschleunigten Bewegung des Verformungskörpers 33 nach oben der Biegebalken 49 nach unten ausgelenkt wird, erfährt der an der Oberseite des Biegebalkens 49 befindliche Dehnungssensor 37 eine positive Dehnung oder Streckung, während der an der Unterseite des Biegebalkens 49 befindliche Dehnungssensor 40 eine negative Dehnung oder Stauchung von gleichem Betrag erfährt. Auch die auf den Biegebalken 49 aufgebrachten Dehnungssensoren 37, 40 sind als Faser-Bragg-Gitter-Sensoren ausgeführt. Grundsätzlich können die zu verformenden Bereiche unter den Dehnungssensoren 35, 37, 39, 40 in Abhängigkeit von der Anwendung sowohl homogene als auch inhomogene Biegeverteilungen erzeugen.

Alle vier Dehnungssensoren 35, 37, 39, 40 stehen über Lichtwellenleiter 30 (Fig. 1) mit der Auswerteeinrichtung 28 in Verbindung. Diese ermittelt anhand der von den auf die Gelenkstellen 61, 62 aufgebrachten Dehnungssensoren 35, 39 empfangenen Signale die statische Kontaktraft, wobei durch Subtraktion des auf Streckung beruhenden Signals von dem auf Stauchung beruhenden Signal oder umgekehrt eine Kompensation der Temperaturabhängigkeit der Dehnungssensoren 35, 39 erfolgt. Gleichermaßen ermittelt die Auswerteeinrichtung 28 anhand der von den auf den Biegebalken 49 aufgebrachten Dehnungssensoren 37, 40 empfangenen Signale die Beschleunigung der Prüfmasse 51. Aus der Beschleunigung kann die Auswerteeinrichtung 28 unter Verwendung des in einem Speicher abgelegten bekannten Betrags der Prüfmasse 51 die mit der Beschleunigung einhergehende Trägheitskraft errechnen. Auf Grundlage der statischen Kontaktkraft und der errechneten Trägheitskraft kann eine trägheitskompensierte Kontaktkraft ermittelt werden.

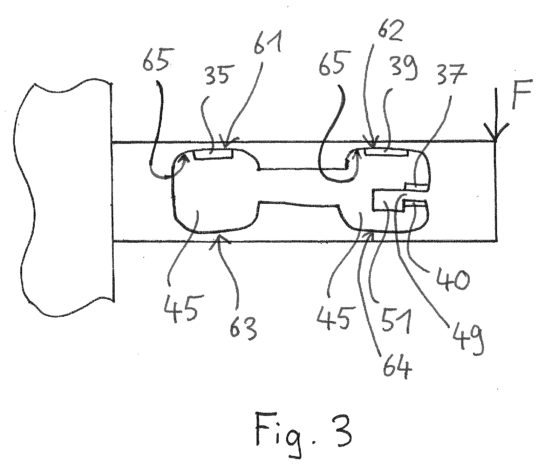

Die in Fig. 3 dargestellte alternative Ausführungsform unterscheidet sich von der vorstehend beschriebenen Konfiguration dadurch, dass die den Gelenkstellen 61, 62 zugeordneten Dehnungssensoren 35, 39 nicht auf die Oberseite des Verformungskörpers 33 aufgebracht sind, sondern auf eine Begrenzungswand 65 der Hohlräume 45 im Bereich der dünnwandigen Gelenkstellen 61, 62.

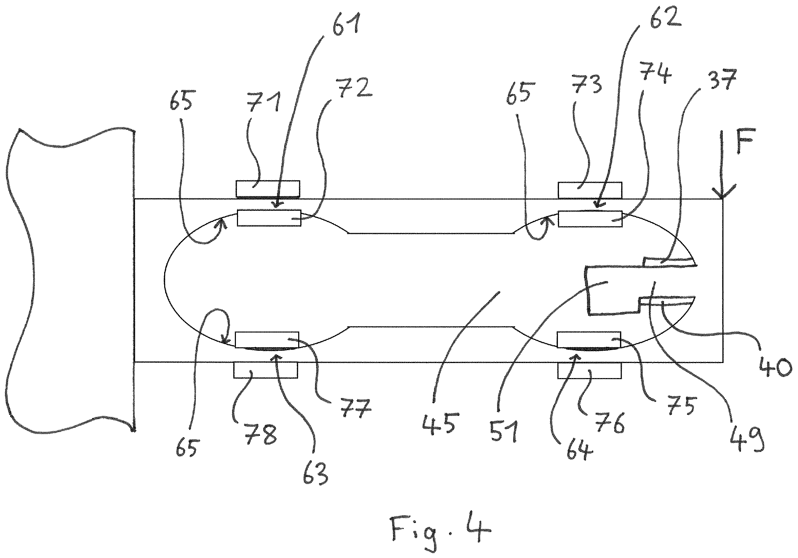

Fig. 4 zeigt eine weitere Ausführungsform eines Verformungskörpers 33 für eine erfindungsgemäße Vorrichtung zum Ermitteln der Kontaktkraft F, wobei gleiche Komponenten mit denselben Bezugszeichen versehen sind wie bei dem Ausführungsbeispiel gemäß Fig. 3. An jeder Gelenkstelle 61-64 ist ein Paar von Dehnungssensoren 71-78 angeordnet, und zwar jeweils ein an der Außenseite des Verformungskörpers 33 vorgesehener Dehnungssensor 71, 73, 76, 78 und ein gegenüberliegender, an der Begrenzungswand 65 des Hohlraums 45 vorgesehener Dehnungssensor 72, 74, 75, 77. Unter dem Einfluss der Kontaktkraft F auf den Verformungskörper 33 erfahren die im Bild oben und links gelegenen Dehnungssensoren 71, 77 ebenso wie die im Bild unten und rechts gelegenen Dehnungssensoren 74, 76 positive Dehnungen oder Streckungen, während die im Bild unten und links gelegenen Dehnungssensoren 77, 78 ebenso wie die im Bild oben und rechts gelegenen Dehnungssensoren 73, 75 negative Dehnungen oder Stauchungen erfahren.

Die Auswerteeinrichtung 28 (Fig. 1) ist dazu ausgebildet, beim Ermitteln der statischen Kontaktkraft für jedes Paar von Dehnungssensoren 71-78 ein Differenzsignal zu berücksichtigen, das auf einer Differenz zwischen einem von dem jeweiligen zu stauchenden Dehnungssensor 72, 73, 75, 78 ausgegebenen Stauchungssignal und einem von dem jeweiligen zu streckenden Dehnungssensor 71, 74, 77, 76 ausgegebenen Streckungssignal beruht. Die Auswerteeinrichtung 28 wendet also ein Gegentakt-Verfahren an, durch welches in erster Näherung durch Differenzbildung der Bragg-Wellenlängen-Verschiebung ein temperaturkompensiertes Dehnungssignal berechnet werden kann. Hierbei können insbesondere die Differenzsignale der Paare von Dehnungssensoren 71-78 gemäß jeweiliger Gewichtungsfaktoren berücksichtigt werden. Die entsprechenden Gewichtungsfaktoren können auf einer Kalibrierung der Vorrichtung bei konstanter Temperatur beruhen. Auf diese Weise ist eine zuverlässige Temperaturkompensation möglich.

Dadurch dass die Ermittlung der temperatur- und trägheitskompensierten Kontaktkraftmessung ausschließlich auf faseroptischen Dehnungssensoren beruht, sind keine nennenswerten Verfälschungen des Messergebnisses aufgrund von elektromagnetischen Störfeldern zu befürchten.

### Bezugszeichenliste:

- 11: Fahrzeug
- 13: Stromabnehmer
- 14: Fahrdraht
- 15: Wippe
- 17: Schleifleiste
- 19: Schleifleistenhalter
- 23: Gestänge
- 25: Isolator
- 27: Vorrichtung zur Kontaktkraftermittlung
- 28: Auswerteeinrichtung
- 29: Sensorkopf
- 30: Lichtwellenleiter
- 32: linkes Balkenende
- 33: Verformungskörper
- 34: rechtes Balkenende
- 35: Dehnungssensor
- 37: Dehnungssensor
- 39: Dehnungssensor
- 40: Dehnungssensor
- 45: Hohlraum
- 47: Passage
- 49: Biegebalken
- 51: Prüfmasse
- 61-64: Gelenkstelle
- 65: Begrenzungswand
- 71-78: Dehnungssensor
- F: Richtung der Kontaktkraft

## Patentansprüche

1. Vorrichtung (27) zum Ermitteln der Kontaktkraft zwischen zwei Bauteilen (13, 14), von denen wenigstens eines beweglich ist, umfassend:
einen Verformungskörper (33), der derart an einem der Bauteile anbringbar ist, dass er unter dem Einfluss der Kontaktkraft zumindest bereichsweise gedehnt wird,
einen an dem Verformungskörper (33) angebrachten ersten Dehnungssensor (39) zum Erfassen der Dehnung, und
eine Auswerteeinrichtung (28), die dazu ausgebildet ist, anhand der erfassten Dehnung eine statische Kontaktkraft zu ermitteln,
**dadurch gekennzeichnet, dass**
eine Prüfmasse (51) derart an einem biegsamen Abschnitt (49) des Verformungskörpers (33) vorgesehen ist, dass sie schwingende Bewegungen in und entgegen der Richtung (F) der Kontaktkraft ausführen kann, wobei
an dem biegsamen Abschnitt (49) ein zweiter Dehnungssensor (40) zum Erfassen der Biegung angebracht ist, wobei die Auswerteeinrichtung (28) dazu ausgebildet ist, anhand der erfassten Biegung eine Beschleunigung der Prüfmasse (51) zu ermitteln und beruhend auf der ermittelten statischen Kontaktkraft und der ermittelten Beschleunigung der Prüfmasse (51) eine trägheitskompensierte Kontaktkraft zu ermitteln, und wobei der erste Dehnungssensor (39) und/oder der zweite Dehnungssensor (37) als faseroptische Sensor(en) ausgebildet ist/ sind.

2. Vorrichtung nach Anspruch 1,
**dadurch gekennzeichnet, dass**
der Verformungskörper (33) eine Aussparung (45) aufweist, in welche der biegsame Abschnitt (49) hineinragt.

3. Vorrichtung nach zumindest einem der vorstehenden Ansprüche,
**dadurch gekennzeichnet, dass**
der erste Dehnungssensor (39) auf einen Bereich des Verformungskörpers (33) aufgebracht ist, welcher unter dem Einfluss der Kontaktkraft eine negative Dehnung erfährt, und wobei ein weiterer Dehnungssensor (35) auf einen Bereich des Verformungskörpers (33) aufgebracht ist, welcher unter dem Einfluss der Kontaktkraft eine positive Dehnung erfährt.

4. Vorrichtung nach Anspruch 3,
**dadurch gekennzeichnet, dass**
wenigstens zwei Paare von Dehnungssensoren (71-78) vorgesehen sind, die jeweils einen unter Einfluss der Kontaktkraft zu stauchenden Dehnungssensor (72, 73, 75, 78) und einen unter dem Einfluss der Kontaktkraft zu streckenden Dehnungssensor (71, 74, 77, 76) umfassen, wobei die Auswerteeinrichtung (28) dazu ausgebildet ist, beim Ermitteln der statischen Kontaktkraft für jedes Paar ein Differenzsignal zu berücksichtigen, das auf einer Differenz zwischen einem von dem jeweiligen zu stauchenden Dehnungssensor (72, 73, 75, 78) ausgegebenen Stauchungssignal und einem von dem jeweiligen zu streckenden Dehnungssensor (71, 74, 77, 76) ausgegebenen Streckungssignal beruht.

5. Vorrichtung nach Anspruch 4,
**dadurch gekennzeichnet, dass**
die Auswerteeinrichtung (28) dazu ausgebildet ist, beim Ermitteln der statischen Kontaktkraft die Differenzsignale der Paare von Dehnungssensoren (71-78) gemäß jeweiliger Gewichtungsfaktoren zu berücksichtigen, wobei die Gewichtungsfaktoren auf einer Kalibrierung der Vorrichtung bei konstanter Temperatur beruhen.

6. Vorrichtung nach zumindest einem der vorstehenden Ansprüche,
**dadurch gekennzeichnet, dass**
der Verformungskörper (33) als Doppelbiegebalken ausgebildet ist.

7. Vorrichtung nach zumindest einem der vorstehenden Ansprüche,
**dadurch gekennzeichnet, dass**
der zweite Dehnungssensor (40) auf einen Bereich des biegsamen Abschnitts (49) aufgebracht ist, welcher bei einer Bewegung der Prüfmasse (51) in Richtung (F) der Kontaktkraft eine negative Dehnung erfährt, und wobei ein weiterer Dehnungssensor (37) auf einen Bereich des biegsamen Abschnitts (49) aufgebracht ist, welcher bei einer Bewegung der Prüfmasse (51) in Richtung (51) der Kontaktkraft eine positive Dehnung erfährt.

8. Vorrichtung nach zumindest einem der vorstehenden Ansprüche,
**dadurch gekennzeichnet, dass**
der biegsame Abschnitt (49) als Biegebalken ausgebildet ist, wobei sowohl auf die Oberseite als auch auf die Unterseite des Biegebalkens jeweils ein Dehnungssensor (37, 40) aufgebracht ist.

9. Vorrichtung nach zumindest einem der vorstehenden Ansprüche,
**dadurch gekennzeichnet, dass**
ein weiterer Dehnungssensor an einem Bereich des Verformungskörpers (33) angebracht ist, welcher unter dem Einfluss der Kontaktkraft nicht zu einer Dehnung gelangt, und/oder dass der Verformungskörper (33) an einem Ende fest mit einem Trägerbauteil (15) eines Stromabnehmers (13) gekoppelt ist und eine Schleifleiste (17) des Stromabnehmers (13) unter dem Einfluss der Kontaktkraft auf das andere Ende des Verformungskörpers (33) drückt.

10. Stromabnehmer für ein Fahrzeug (11), der mit einer Vorrichtung (27) gemäß einem der vorstehenden Ansprüche ausgestattet ist.

11. Fahrzeug (11), insbesondere Schienenfahrzeug, das einen mit einem Fahrdraht (14) in Kontakt zu bringenden Stromabnehmer (13) gemäß Anspruch 10 aufweist.

12. Verfahren zum Ermitteln der Kontaktkraft zwischen zwei Bauteilen (13, 14), von denen wenigstens eines beweglich ist, umfassend die Schritte:
Anbringen eines Verformungskörpers (33) an dem beweglichen Bauteil (13);
zumindest bereichsweises Dehnen des Verformungskörpers (33) unter dem Einfluss der Kontaktkraft;
Erfassen der Dehnung des Verformungskörpers (33) mittels eines an dem Verformungskörper (33) angebrachten ersten Dehnungssensors (39); und
Ermitteln einer statischen Kontaktkraft anhand der erfassten Dehnung,
**gekennzeichnet durch** die weiteren Schritte:
Anordnen einer Prüfmasse (51) an einem biegsamen Abschnitt (49) des Verformungskörpers (33) derart, dass sie schwingende Bewegungen in und entgegen der Richtung der Kontaktkraft ausführen kann;
Erfassen der Biegung des biegsamen Abschnitts (49) mittels eines an dem biegsamen Abschnitt (49) angebrachten zweiten Dehnungssensors (35);
Ermitteln einer Beschleunigung der Prüfmasse (51) anhand der erfassten Biegung; und
Ermitteln einer trägheitskompensierten Kontaktkraft anhand der ermittelten statischen Kontaktkraft und der ermittelten Beschleunigung der Prüfmasse (51), wobei
das Erfassen der Dehnung des Verformungskörpers (33) und/oder das Erfassen der Biegung des biegsamen Abschnitts (49) mittels eines faseroptischen Sensors oder mittels jeweiliger faseroptischer Sensoren durchgeführt wird.

13. Verfahren nach Anspruch 12,
**dadurch gekennzeichnet, dass**
der Verformungskörper (33) an einem Stromabnehmer (13) eines Fahrzeugs (11) angebracht wird, wobei die trägheitskompensierte Kontaktkraft während des Betriebs des Fahrzeugs (11) wiederholt oder kontinuierlich ermittelt wird.

14. Verfahren nach Anspruch 12 oder 13,
**dadurch gekennzeichnet, dass**
beim Ermitteln der statischen Kontaktkraft sowohl eine von dem ersten Dehnungssensor (39) erfasste Stauchung eines Bereichs des Verformungskörpers (33) als auch eine von einem weiteren Dehnungssensor (35) erfasste Streckung eines Bereichs des Verformungskörpers (33) berücksichtigt werden, und/oder dass beim Ermitteln der Beschleunigung der Prüfmasse (51) sowohl eine von dem zweiten Dehnungssensor (40) erfasste Stauchung eines Bereichs des Verformungskörpers (33) als auch eine von dem weiteren Dehnungssensor (37) erfasste Streckung eines Bereichs des Verformungskörpers (33) berücksichtigt werden.

## Claims

1. An apparatus (27) for determining the contact force between two components (13, 14), of which at least one is movable, comprising:
a deformation body (33) which can be attached to one of the components such that it is at least regionally strained under the influence of the contact force;
a first strain sensor (39) attached to the deformation body (33) for detecting the strain; and
an evaluation device (28) which is configured to determine a static contact force with reference to the detected strain,
**characterized in that**
a test mass (51) is provided at a flexible section (49) of the deformation body (33) such that it can carry out oscillating movements in and against the direction (F) of the contact force,
in which
a second strain sensor (40) is attached to the flexible section (49) for detecting the bend; in which
the evaluation device (28) is configured to determine an acceleration of the test mass (51) with reference to the detected bend and to determine a contact force compensated with respect to inertia on the basis of the determined static contact force and on the basis of the determined acceleration of the test mass (51); and in which the first strain sensor (39) and/or the second strain sensor (37) is/are configured as fiber optic sensors.

2. An apparatus in accordance with claim 1,
**characterized in that**
the deformation body (33) has a recess (45) into which the flexible section (49) projects.

3. An apparatus in accordance with at least one of the preceding claims,
**characterized in that**
the first strain sensor (39) is attached to a region of the deformation body (33) which undergoes a negative strain under the influence of the contact force and with a further strain sensor (35) being attached to a region of the deformation body (33) which undergoes a positive strain under the influence of the contact force.

4. An apparatus in accordance with claim 3,
**characterized in that**
at least two pairs of strain sensors (71-78) are provided which each comprise a strain sensor (72, 73, 75, 78) to be compressed under the influence of the contact force and a strain sensor (71, 74, 77, 76) to be stretched under the influence of the contact force, with the evaluation device (28) being configured to take into account a difference signal for each pair in the determination of the static contact force, said difference signal being based on a difference between a compression signal output by the respective strain sensor (72, 73, 75, 78) to be compressed and a stretch signal output by the respective strain sensor (71, 74, 77, 76) to be stretched.

5. An apparatus in accordance with claim 4,
**characterized in that**
the evaluation device (28) is configured take into account the difference signals of the pairs of strain sensors (71-78) in accordance with respective weighting factors in the determination of the static contact force, with the weighting factors being based on a calibration of the apparatus at a constant temperature.

6. An apparatus in accordance with at least one of the preceding claims,
**characterized in that**
the deformation body (33) is configured as a double bending beam.

7. An apparatus in accordance with at least one of the preceding claims,
**characterized in that**
the second strain sensor (40) is attached to a region of the flexible section (49) which undergoes a negative strain on a movement of the test mass (51) in the direction (F) of the contact force and with a further strain sensor (37) being attached to a region of the flexible section (49) which undergoes a positive strain on a movement of the test mass (51) in the direction (F) of the contact force.

8. An apparatus in accordance with at least one of the preceding claims,
**characterized in that**
the flexible section (49) is configured as a bending beam, with a respective strain sensor (37, 40) being attached both to the upper side and to the lower side of the bending beam.

9. An apparatus in accordance with at least one of the preceding claims,
**characterized in that**
a further strain sensor is attached to a region of the deformation body (33) which does not undergo a strain under the influence of the contact force; and/or **in that**
the deformation body (33) is fixedly coupled to a carrier component (15) of a pantograph (13) at one end and a contact strip (17) of the pantograph (13) presses onto the other end of the deformation body (33) under the influence of the contact force.

10. A pantograph for a vehicle (11) which is equipped with an apparatus (27) in accordance with any one of the preceding claims.

11. A vehicle (11), in particular a rail vehicle, which has a pantograph (13) in accordance with claim 10 to be brought into contact with a catenary wire (14).

12. A method of determining the contact force between two components (13, 14), of which at least one is movable, comprising the steps:
attaching a deformation body (33) to the movable component (13);
at least regionally straining the deformation body (33) under the influence of the contact force;
detecting the strain of the deformation body (33) by means of a first strain sensor (39) attached to the deformation body (33); and
determining a static contact force with reference to the detected strain,
**characterized by** the further steps:
arranging a test mass (51) at a flexible section (49) of the deformation body (33) such that it can carry out oscillating movements in and against the direction of the contact force;
detecting the bend of the flexible section (49) by means of a second strain sensor (35) attached to the flexible section (49);
determining an acceleration of the test mass (51) with reference to the detected bend; and
determining a contact force compensated with respect to inertia with reference to the determined static contact force and to the determined acceleration of the test mass (51), with the detection of the strain of the deformation body (33) and/or the detection of the bend of the flexible section (49) being carried out by means of a fiber optic sensor or by means of respective fiber optic sensors.

13. A method in accordance with claim 12,
**characterized in that**
the deformation body (33) is attached to a pantograph (13) of a vehicle (11), with the contact force compensated with respect to inertia being determined repeatedly or continuously during the operation of the vehicle (11).

14. A method in accordance with claim 12 or claim 13,
**characterized in that**
both a compression of a region of the deformation body (33) detected by the first strain sensor (39) and a stretching of a region of the deformation body (33) detected by a further strain sensor (35) are taken into account in the determination of the static contact force; and/or **in that**
both a compression of a region of the deformation body (33) detected by the second strain sensor (40) and a stretching of a region of the deformation body (33) detected by the further strain sensor (37) are taken into account in the determination of the acceleration of the test mass (51).

## Revendications

1. Dispositif (27) de détermination de la force de contact entre deux composants (13, 14), dont l'un au moins est mobile, comprenant :
un corps de déformation (33) qui est apte à être monté sur l'un des composants de manière à être dilaté au moins localement sous l'influence de la force de contact,
un premier capteur de dilatation (39) monté sur le corps de déformation (33) pour détecter la dilatation, et
un moyen d'évaluation (28) qui est réalisé pour déterminer une force de contact statique en se basant sur la dilatation détectée,
caractérisé ce que
il est prévu une masse de contrôle (51) sur une portion flexible (49) du corps de déformation de manière à pouvoir effectuer des mouvements oscillants dans la direction (F) de la force de contact et en sens opposé,
dans lequel
un second capteur de dilation (40) est monté sur la portion flexible (49) pour détecter la flexion,
le moyen d'évaluation (28) est réalisé pour déterminer une accélération de la masse de contrôle (51) en se basant sur la flexion détectée, et pour déterminer une force de contact compensée vis-à-vis de l'inertie en se basant sur la force de contact statique déterminée et sur l'accélération déterminée de la masse de contrôle (51),
le premier capteur de dilatation (39) et/ou le second capteur de dilatation (37) est/sont réalisé(s) sous forme de capteur(s) à fibre optique.

2. Dispositif selon la revendication 1,
**caractérisé en ce que**
le corps de déformation (33) présente une échancrure (45) dans laquelle pénètre la portion flexible (49).

3. Dispositif selon l'une des revendications précédentes,
**caractérisé en ce que**
le premier capteur de dilatation (39) est monté sur une zone du corps de déformation (33), qui subit une dilatation négative sous l'influence de la force de contact, et un autre capteur de dilatation (35) est monté sur une zone du corps de déformation (33) qui subit une dilatation positive sous l'influence de la force de contact.

4. Dispositif selon la revendication 3,
**caractérisé en ce que**
il est prévu au moins deux paires de capteurs de dilatation (71 - 78) qui comprennent chacune un capteur de dilatation (72, 73, 75, 78) à refouler sous l'influence de la force de contact et un capteur de dilatation (71, 74, 77, 76) à étirer sous l'influence de la force de contact,
dans lequel le moyen d'évaluation (28) est réalisé pour prendre en compte un signal de différence pour chaque paire lors de la détermination de la force de contact statique, ledit signal se basant sur une différence entre un signal de refoulement émis par le capteur de dilatation respectif (72, 73, 75, 78) à refouler et un signal d'étirage émis par le capteur de dilatation respectif (71, 74, 77, 76) à étirer.

5. Dispositif selon la revendication 4,
**caractérisé en ce que**
le moyen d'évaluation (28) est conçu pour prendre en compte, lors de la détermination de la force de contact statique, les signaux de différence des paires de capteurs de dilatation (71 - 78) selon des facteurs de pondération respectifs, les facteurs de pondération étant basés sur un calibrage du dispositif à une température constante.

6. Dispositif selon l'une des revendications précédentes,
**caractérisé en ce que**
le corps de déformation (33) est réalisé sous forme de double poutre de flexion.

7. Dispositif selon l'une des revendications précédentes,
**caractérisé en ce que**
le second capteur de dilatation (40) est monté sur une zone de la portion flexible (49) qui, lors d'un mouvement de la mase de contrôle (51) en direction (F) de la force de contact, subit une dilatation négative, et
un autre capteur de dilatation (37) est monté sur une zone de la portion flexible (49) qui, lors d'un mouvement de la mase de contrôle (51) en direction (51) de la force de contact, subit une dilatation positive.

8. Dispositif selon l'une des revendications précédentes,
**caractérisé en ce que**
la portion flexible (49) est réalisée sous forme de poutre de flexion, et aussi bien sur la face supérieure que sur la face inférieure de la poutre de flexion, il est prévu respectivement un capteur de dilatation (37, 40).

9. Dispositif selon l'une des revendications précédentes,
**caractérisé en ce que**
un autre capteur de dilatation est monté sur une zone du corps de déformation (33), qui ne vient pas se dilater sous l'influence de la force de contact, et/ou **en ce que**
à une extrémité, le corps de déformation (33) est couplé fermement à un composant de support (15) d'un pantographe (13), et une bande de frottement (17) du pantographe (13) appuie sur l'autre extrémité du corps de déformation (33) sous l'influence de la force de contact.

10. Pantographe pour un véhicule (11), qui est équipé d'un dispositif (27) selon l'une des revendications précédentes.

11. Véhicule (11), en particulier véhicule ferroviaire, qui comprend un pantographe (13) selon la revendication 10 à mettre en contact avec un fil caténaire (14).

12. Procédé de détermination de la force de contact entre deux composants (13, 14) dont l'un au moins est mobile, comprenant les étapes suivantes :
monter un corps de déformation (33) sur le composant mobile (13) ;
dilater au moins localement le corps de déformation (33) sous l'influence de la force de contact ;
détecter la dilatation du corps de déformation (33) au moyen d'un premier capteur de dilatation (39) monté sur le corps de déformation (33) ; et
déterminer une force de contact statique en se basant sur la dilatation détectée,
**caractérisé par** les autres étapes suivantes :
agencer une masse de contrôle (51) sur une portion flexible (49) du corps de déformation (33) de manière à pouvoir exercer des mouvements oscillants dans la direction de la force de contact et en sens opposé ;
détecter la flexion de la portion flexible (49) au moyen du second capteur de dilation (35) monté sur la portion flexible (49) ;
déterminer une accélération de la masse de contrôle (51) en se basant sur la flexion détectée ; et
déterminer une force de contact compensée vis-à-vis de l'inertie en se basant sur la force de contact statique déterminée et sur l'accélération déterminée de la masse de contrôle (51),
dans lequel
on met en oeuvre la détection de la dilatation du corps de déformation (33) et/ou la détection de la flexion de la portion flexible (49) au moyen d'un capteur à fibre optique ou au moyen de capteurs respectifs à fibre optique.

13. Procédé selon la revendication 12,
**caractérisé en ce que**
on monte le corps de déformation (33) sur un pantographe (13) d'un véhicule (11), et on détermine à répétition ou en continu la force de contact compensée vis-à-vis de l'inertie pendant le fonctionnement du véhicule (11).

14. Procédé selon la revendication 12 ou 13,
**caractérisé en ce que**
lors de la détermination de la force de contact statique, on prend en compte aussi bien un refoulement d'une zone du corps de déformation (33), détecté par le premier capteur de dilatation (39), qu'un étirage d'une zone du corps de déformation (33), détecté par un autre capteur de dilatation (35), et/ou **en ce que**
lors de la détermination de l'accélération de la masse de contrôle (51), on prend en compte aussi bien un refoulement d'une zone du corps de déformation (33), détecté par le second capteur de dilatation (40), qu'un étirage d'une zone du corps de déformation (33), détecté par un autre capteur de dilatation (37).
